# EUROPEAN PATENT APPLICATION

(11) **EP 3 340 152 A1**
(43) Date of publication of application: **27.06.2018**
(21) Application number: 16382641.5
(22) Date of filing: 22.12.2016
(51) Int. Cl.: G06Q 30/02

(54) **METHOD OF SELECTING AND DELIVERING CONTENT FOR PRIVACY-PROTECTED TARGETING CONTENT SYSTEMS**

(71) Applicant: Telefonica Digital España, S.L.U., 28013 Madrid (ES)
(72) Inventor: SORIENTE, Claudio, 28013 MADRID (ES)
(74) Representative: Herrero & Asociados, S.L.

(57) **Abstract**

A method for selecting and delivering content by a server in privacy-protected targeting content systems comprises computing an associated data set D having a one-to-one mapping between its elements and elements c₁≤ c₂,...,cₙ₋₁≤cₙ of a client set C of content categories sorted by order of client's interests. Both client and server run a PSI protocol applied to the sets C, D and a server set S of content categories, to obtain the intersection C∩S of the client and server category sets and, for each element cᵢ∈ C∩S, the corresponding one-to-one mapped element dᵢ, dᵢ∈D* D* denoting the sorted set of associated data D. The server maps the preorder relation of the sorted set D* to the intersection set C∩S, wherein for each dᵢ,dⱼ∈ D* and cᵢ,cⱼ∈ C∩S, dᵢ≤dⱼ if cᵢ≤cⱼ to obtain a sorted intersection set, from which it selects set the category of the contents that the servers delivers to the client.

## Description

### Field of the invention

The present invention has its application within the telecommunication sector, especially, deals with the field of providing targeted content, such as advertising or special offers, in a way that does not compromise the consumer's privacy. More particularly, the present invention refers to a method of private set ranking to select content for privacy-protected advertisement systems.

### Background of the invention

Advertising forms an important part of broadcast programming including broadcast video (television), radio and printed media. Also, online advertising is increasing in social networks and every web page. One way to increase the effectiveness of the ads is to deliver ads that are relevant (targeted) to the subscribers. In order to deliver targeted ads, traits, characteristics and interests of the subscribers need to be identified (i.e., subscriber profile).

In online targeted advertising the client is a user browsing a website that displays ads, and the server is an ad-exchange in charge of populating the ads on the website the client is browsing. Both client interests and ads are mapped to a global set of categories U. For example U = {books, computers, cooking, fashion, finance, movies, politics, sport, travel}. The set of categories that are relevant (i.e., interesting) for a client is usually called the profile. For example a client profile may be C = {books, movies, travel}.

The server has a set of ads (each mapped to one or more categories of U) and its goal is to serve to the client those ads that match the client interests. For example, the server may have ads with categories S={computers, movies, sport, travel} where an ad mapped to {travel} matches the client interest while an ad mapped to {computers} does not match the client interest.

The goal of the server is, therefore, to compute which of the categories of its ads match the categories of the client profile. In the example above, the server wants to learn the intersection C∩S = {movies, travel}. Furthermore, among such matching categories, the server may wish to learn which categories are more relevant to the client. This information allows the server to serve the ads that mostly interest the client, among all the ads that interest the client. The client may define an ordered profile (C, ≤) where ≤ is a preorder relation between the client's interests in determined categories of contents; for example, travel ≤ books ≤ movies to reflect the fact that the client is mostly interested in movies, then in books, and lastly in travel. Therefore, the server wishes to learn the ordered intersection (C∩S, ≤) where travel ≤ movies.

Current practice entails the client to send its whole profile C to the server so that the server can compute C∩S or (C∩S, ≤) in case an order relationship is defined over C. Nevertheless, this is often regarded as a privacy breach because the server also learns user interests that are not related to ads that the server can serve. That is, the server also learns C\S. In the above example, when the server receives C, it also learns that the client is interested in {books} even if the server cannot serve any ad related to that category.

There are solutions, as disclosed in US2001/0049620, US6327574 and US2002/0123928, which solve the privacy problem by having the server sending its set of ads or categories S to the client so that the client can compute C∩S or (C∩S, ≤) in case an order relationship is defined over C.

US2001/0049620 discloses a system for transaction profiling in a privacy-protected manner, e.g., in the context of television programming, the transaction data may relate to programming and advertisements watched by the user. A transaction profile vector based on the evaluation of the recorded transaction data is computed. To protect privacy, the generation of this profile vector takes place local to the transaction.

US6327574 describes structured documents delivered electronically to the consumer for information to create a consumer profile and a detailed model of the consumer using mathematical functions that map from the specific transactions of the consumer to estimates of the relevancy of certain attributes to the consumer. These models can be used to order a number of pieces of conditional content with respect to how well they match the attributes of the consumer, and hence how well they may appeal to the consumer's interests.

US2002/0123928 teaches to form groups of subscribers by correlating at least one type of subscriber profile to elements of a content delivery system, correlating ad profiles to subscriber/subscriber group profiles and selecting targeted advertisements for the subscribers/subscriber groups based on the correlation.

Other existing solutions are Private Set Intersection (PSI) protocols, as the one disclosed by Cristofaro et al. in "Practical private set intersection protocols with linear complexity" (Financial Cryptography and Data Security, FC, pages 143-159, 2010) and the approach disclosed by Freedman et al. in "Efficient private matching and set intersection" (International Conference on the Theory and Applications of Cryptographic Techniques, EUROCRYPT, pages 1-19, 2004).

Private Set Intersection (PSI) is a privacy-preserving protocol that allows two parties (e.g., a client and a server) to compute the intersection of their private sets without revealing any other information to the other party.

More specifically, let U be a universe of elements. Let a client hold set C⊆U and let a server hold set S⊆U. At the end of the PSI protocol, the server learns C∩S, while the client learns nothing (apart from the size of the set S). In particular, no party learns the elements which are not in C∩S. Assuming that a total order relationship ≤ is defined over C. PSI does not allow the server to learn the restriction of ≤ over C∩S. In other words, PSI does not allow the server to learn the order relationship in C∩S.

In the above example, where the server has ads with categories S={computers, movies, sport, travel} and the client profile is C = {books, movies, travel}, where the client defines an ordered profile (C, ≤) where travel < books < movies, PSI allows the server to learn C∩S={movies, travel} but the server does not learn that movies is ranked higher than travel in the customer profile. At the end of the protocol only one party (e.g., the server) learns the intersection while the other party learns nothing. Elements that are not included in the intersection are not disclosed to the other party.

Another solution is disclosed by Jonnson et al. in "Secure multi-party sorting and applications" (IACR Cryptology ePrint Archive, 2011). Jonnson et al. design a privacy-preserving protocol to sort two weighted vectors, such that the output vector can be sorted according to the sum of the weights in input. This protocol could be used in the problem at hand, assuming that the server uses a fixed weight for all elements of the server set S. Nevertheless, the server could also learn the client elements that do not belong to the intersection and the order of those elements, if the client has defined an order relation (C, ≤).

A generic multi-party computation framework in which a privacy-preserving ranking of sets can also be computed is described by Bogdanov et al. in "A practical analysis of oblivious sorting algorithms for secure multi-party computation(Secure IT Systems - 19th Nordic Conference, NordSec, pages 59-74, 2014). In such scenario, data is secret-shared among parties that engage in an interactive sorting protocol. At the end of the protocol, each party holds sorted shares and the parties can aggregate their shares to learn the sorted sequence. Such protocol, however, assumes the order relation to be available to all parties involved in sorting.

"Sorting and searching behind the curtain" by Baldimtsi et al. (Financial Cryptography and Data Security, FC, pages 127-146, 2015] teaches how a client can encrypt a vector and outsource the sorting function to an untasted server. The client receives the encrypted vector where ciphertexts are sorted. In Baldimtsi et al, there is no intersection between the set of the client and the one of the server.

On the other hand, it is well known in prior art the so-called Order-Preserving symmetric Encryption (OPE), which is a deterministic encryption scheme whose encryption function preserves numerical ordering of the plaintexts. For example, OPE is described by Boldyreva el al. in "Order-Preserving Symmetric Encryption" (IACR Cryptology ePrint Archive, Report 2012/624, 2012). The reason for new interest in OPE schemes is that they allow efficient range queries on encrypted data. That is, a remote untrusted database server is able to index the (sensitive) data it receives, in encrypted form, in a data structure that permits efficient range queries (asking the server to return ciphertexts in the database whose decryptions fall within a given range, say [a; b]). Order-Preserving Encryption scheme (OPES) allows comparison operations to be directly applied on encrypted data, without decrypting the operands.

Finally, Private Set Intersection with Data Transfer (PSIDT) disclosed by Cristofaro et al. in "Practical Private Set Intersection Protocols with Linear Computational and Bandwidth Complexity" (IACR Cryptology ePrint Archive, Report 2009/491, 2009] must be considered as an extension of PSI that works as follows: Let U be a universe of elements. Let the client hold set C⊆U and let the server hold set S⊆U. Let D be a set of "associated data" such that there is a one-to-one mapping between elements of C and elements of D. It is not needed that D⊆U (i.e., D must not be in U) but the set of "associated data" D is required to be a subset of N (the set of natural numbers). At the end of PSIDT, the server only learns C∩S and, for each element cᵢ∈ C∩S, it also learns the corresponding associated element dᵢ∈D. The client learns nothing (apart from the size of the set S).

Summarizing, current practice in the advertising ecosystem requires the client to send the complete client profile to the server, therefore breaching the client privacy. The existing solutions to this problem require the server to share its set of ads with the client, therefore breaching server privacy too. Existing Private Set Intersection (PSI) protocols do not work when one of the sets features an order relation. In this case, the output of the PSI protocol is a set with no defined order. Therefore, there is a need in the state of the art for providing a method to compute the intersection of client and server sets, i.e., C∩S, and additionally allows the server to learn the restriction of ≤ over C∩S.

### Summary of the invention

The present invention solves the aforementioned problem and overcomes previously explained state-of-art work limitations by providing a method for Private Set Ranking (PSR) which improves Private Set Intersection (PSI) as it allows the client and the server to engage in an interactive protocol where, at the end of the protocol, the server learns (C∩S, ≤) without learning or disclosing any elements (or their order) not belonging to C∩S.

Compared to state-of-the-art PSI protocols, the present invention allows two parties, e.g., a client and a server, with private sets C and S, where ≤ is an arbitrary order relation over C, to privately compute the intersection of their set C∩S and additionally allows the server to learn the restriction of ≤ over C∩S. In the above example, described in the background of the invention, the server learns that C∩S = {movies, travel} and that movies ≤ travel according to the client profile.

In the context of the invention, the private sets C and S correspond to sets of categories of products and services that are of interest to consumers, who are the targets to be provided with content (e.g. promotions, advertisements) on products and services that match their interests. In the context of the invention, ≤ denotes a preorder relation, and when sorting the client set C according to the preorder relation, the elements (categories of contents) of the sorted set C denoted as c₁,...,cₙ, are ordered, c₁≤ c₂,...,cₙ₋₁≤cₙ, following the order of the client's interests in each category, from the less interesting category (c₁) to the most interesting category for the client (cₙ).

According to a first aspect of the present invention, a method for selecting content in Privacy-Protected Targeting Content systems is disclosed and comprises the following steps:
- the client sorts its set C according to a preorder relation, c₁≤ c₂,...,cₙ₋₁≤cₙ where n=|C|;
- computing an associated data set D having a one-to-one mapping between elements of the sorted set C and elements of associated data set D;
- both the client and the server run a Private Set Intersection protocol applied to the client sorted set C, the associated data set D and the server set S;
- the server obtains, from the previous step, the intersection of the client and server sets C∩S and, for each element cᵢ∈ C∩S, the corresponding one-to-one mapped element dᵢ from the associated data set D, the obtained elements dᵢ forming a sorted set denoted as D*, dᵢ∈D*;
- the server maps the preorder relation of the sorted set D* to the intersection set C∩S, wherein for each dᵢ,dⱼ∈ D* and cᵢ,cⱼ∈ C∩S, dᵢ≤dⱼ if cᵢ≤cⱼ to obtain a sorted intersection set;
- the server selects the category of the content to be served from the sorted intersection set and delivers content of the selected category to the client.

The method in accordance with the above described aspects of the invention has a number of advantages with respect to prior art, which can be summarized as follows:
- Improves current state of the art on PSI allowing the server to learn not only the intersection of its set with the one of the client, but also the restriction of ≤ over the intersection, where ≤ is an arbitrary order relation defined by the client over its set.
- In the context of targeted content systems, allows the content provider to learn which content is relevant to the recipient.

These and other advantages will be apparent in the light of the detailed description of the invention.

### Description of the drawings

For the purpose of aiding the understanding of the characteristics of the invention, according to a preferred practical embodiment thereof and in order to complement this description, the following figures are attached as an integral part thereof, having an illustrative and non-limiting character:

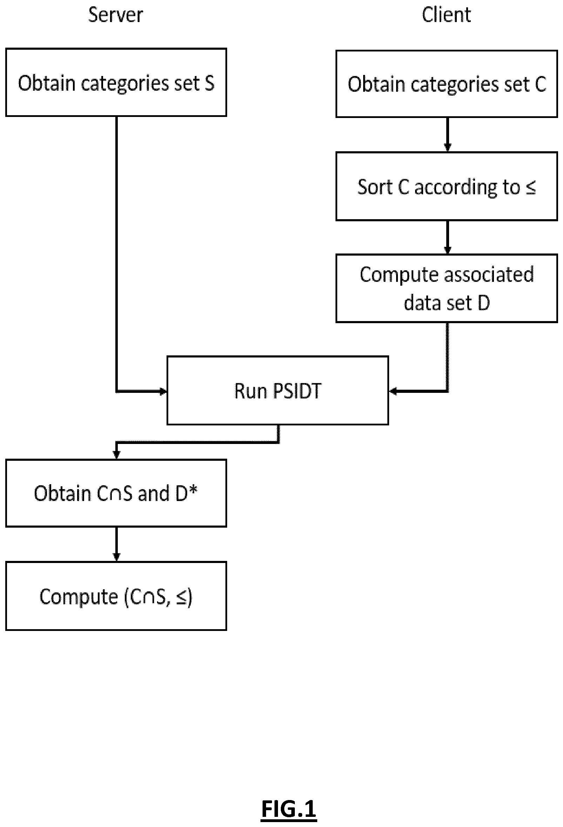

Figure 1 shows a flow chart of a method for private set ranking to select targeted content, according to a possible embodiment of the invention.

### Preferred embodiment of the invention

The matters defined in this detailed description are provided to assist in a comprehensive understanding of the invention. Of course, the embodiments of the invention described here can be implemented in a variety of architectural platforms, operating and server systems, devices, systems, or applications. Any particular architectural layout or implementation presented herein is provided for purposes of illustration and comprehension only and is not intended to limit aspects of the invention.

A posible embodiment of the invention is a method of Private Set Ranking as depicted in Figure 1 and outlined below. For the description of the protocol, the following notation is used:
n=|**C**|; **D**={d₁,...,dₙ}; c₁,...,cₙ is the set **C** sorted according to **≤; D***={dᵢ: cᵢ∈ **C**∩**S**).

The server and the client independently compute their set of categories, denoted by S and C, respectively. For both sets, we have C⊆U and S⊆U where U is the set of all possible categories. The client sorts C according to ≤ and later computes D as follows: Set d₁ as a random number from the set of natural numbers N. For 2≤i≤n, if cᵢ₋₁**≤**cᵢ AND cᵢ₋₁**≤**cᵢ then set dᵢ=dᵢ₋₁, otherwise set dᵢ as a random natural number such that dᵢ₋₁<dᵢ.

Let PSIDT(client,**C**, **D**, server,**S**) be an instance of the algorithm Private Set Intersection with Data Transfer (PSIDT) described by Cristofaro et al., where the client has private input set C and associated data set D, while the server has private input set S. Once the client has defined **D,** the two parties run PSIDT(client,**C**, **D**,server,**S**). For example, the server can encode the elements of **S** as the zero of a polynomial P and can leverage an homomorphic encryption scheme to encrypt the coefficients of P. The encrypted polynomial E(P) is sent to the client. The client, for each cᵢ∈**C**, computes yᵢ=E(P(cᵢ)+dᵢ) and sends it to the server. Note that if cᵢ∈**C**∩**S**, then yᵢ=E(P(cᵢ)+dᵢ)=dᵢ so that when the server decrypts yᵢ, it learns dᵢ. Therefore, at the end of PSIDT, the server learns **C**∩**S** and, for each element cᵢ∈ **C**∩**S**, it also learns the corresponding associated element dᵢ∈**D**. The server can now map the order relation **≤** of **D*** to the set **C**∩**S** since for each dᵢ,dⱼ∈ **D*** and cᵢ,cⱼ∈ **C**∩**S**, dᵢ≤dⱼ if cᵢ≤cⱼ.

In the following, a concrete example of the protocol running is provided, using the same application scenario detailed above, i.e., the client is a browsing application and the server is a web-server serving targeted online ads. Table 1 below summarizes the concrete values used throughout the example.

**Table 1**

| | |
|---|---|
| **U** | {books, computers, cooking, fashion, finance, movies, politics, sport, travel} |
| **S** | {computers, movies, sport, travel} |
| **C** | {books, movies, travel} |
| **C sorted with ≤** | travel, books, movies |
| **D** | 12532,754345,5675688 |
| **C**∩**S** | {travel, movies} |
| **D*** | 12532,5675688 |
| **C**∩**S sorted with ≤** | travel, movies |

Assume the universe of possible categories to be **U**={books, computers, cooking, fashion, finance, movies, politics, sport, travel}. Let the categories of interest for the client be **C**={books, movies, travel} and let the order relationship be c₁ **<** c₂ **<** c₃, where c₁=travel, c₂=books, c₃=movies. Let the set of categories of the ads available at the server be **S**={computers, movies, sport, travel}.

At this point the client must define the set of associated data **D.** In order to do so, the client selects a number uniformly at random from N and assigns it to d₁. For example, the client could pick d₁ = 12532. Since c₁ < c₂ the client picks d₂ uniformly at random such that d₂>d₁. For example, the client could pick d₂ = 754345. Since c₂ < c₃ the client picks d₃ uniformly at random such that d₃>d₂. For example, the client could pick d₂ = 5675688. The final set of associated data is **D** = {12532, 754345, 5675688}. The client and the server run PSIDT so that, at the end of the protocol, the server learns **C**∩**S** = {travel, movies} and **D*** = {12532, 5675688}. Since 12532 < 5675688, the server also learns that travel < movies.

An alternative to compute the set of associated data **D** is as follows: For 1≤i≤n, set dᵢ=Enc(cᵢ), where Enc() is an Order-Preserving Encryption function (OPE).

The proposed embodiments can be implemented as a collection of software elements, hardware elements, firmware elements, or any suitable combination of them.

Note that in this text, the term "comprises" and its derivations (such as "comprising", etc.) should not be understood in an excluding sense, that is, these terms should not be interpreted as excluding the possibility that what is described and defined may include further elements, steps, etc.

## Claims

1. A method for selecting and delivering content in privacy-protected targeting content systems, where a server and a client compute independently private sets of categories, respectively a server set S and a client set C, being C⊆U and S⊆U where U is a set of all possible categories of contents, the server being configured to serve content to the client, the content being associated with a category from the server set S and the category being selected from the intersection of the client and server sets C∩S, the method **characterized by** comprising:
- the client sorting the client set C according to a preorder relation, denoting the elements of the sorted set C as c₁,...,cₙ, where n=|C| and c₁≤ c₂,...,cₙ₋₁≤cₙ;
- computing an associated data set D having a one-to-one mapping between elements of the sorted set C and elements of the associated data set D;
- both the client and the server running a Private Set Intersection protocol applied to the client sorted set C, the associated data set D and the server set S;
- the server obtaining from the Private Set Intersection protocol the intersection of the client and server sets C∩S and, for each element cᵢ∈ C∩S, the corresponding one-to-one mapped element dᵢ from the associated data set D, the obtained elements dᵢ forming a sorted set denoted as D*, dᵢ∈D*;
- the server mapping the preorder relation of the sorted set D* to the intersection set C∩S, wherein for each dᵢ,dⱼ∈ D* and cᵢ,cⱼ∈ C∩S, dᵢ≤dⱼ if cᵢ≤cⱼ to obtain a sorted intersection set;
- the server selecting the category of the content to be served from the sorted intersection set; and
- the server delivering content of the selected category to the client.

2. The method according to claim 1, wherein the associated data set D is computed as follows:
- setting d₁ as a random natural number,
- for 2≤i≤n, if cᵢ₋₁**≤**cᵢ AND cᵢ₋ᵢ**≤**cᵢ then setting dᵢ=dᵢ₋₁;
- otherwise, setting dᵢ as a random such that dᵢ₋₁<dᵢ.

3. The method according to claim 2, wherein running the Private Set Intersection protocol comprises:
- the server encoding the elements of the server set S as the zero of a polynomial P and encrypting the coefficients of the polynomial P by an homomorphic encryption,
- sending from the server to the client the encrypted polynomial E(P),
- for each cᵢ∈**C**, the client computing an encrypted element yᵢ=E(P(cᵢ)+dᵢ) and sending the encrypted element yᵢ to the server;
- the server decrypting the received encrypted element yᵢ to obtain the corresponding one-to-one mapped element dᵢ from the associated data set D.

4. The method according to claim 1, wherein the associated data set D is computed as follows: for 1≤i≤n, setting dᵢ=Enc(cᵢ), where Enc() is an Order-Preserving Encryption function.
